# EUROPEAN PATENT SPECIFICATION

(11) **EP 3 464 201 B1**
(45) Date of publication and mention of the grant of the patent: **22.04.2020**
(21) Application number: 17729689.4
(22) Date of filing: 01.06.2017
(51) Int. Cl.: C03B 33/023, C03B 33/037, C03B 33/09

(54) **APPARATUS AND METHOD OF MANAGING MECHANICALLY INDUCED STRESS ON A CRACK TIP WHEN SEPARATING A FLEXIBLE GLASS RIBBON**
VORRICHTUNG UND VERFAHREN ZUR VERWALTUNG VON MECHANISCH INDUZIERTEM STRESS AUF EINER RISSSPITZE BEIM TRENNEN EINES FLEXIBLEN GLASBANDS
APPAREIL ET PROCÉDÉ DE GESTION DE LA CONTRAINTE INDUITE MÉCANIQUEMENT SUR UNE POINTE DE FISSURE LORS DE LA SÉPARATION D'UN RUBAN DE VERRE SOUPLE

(30) Priority: 03.06.2016 US 201662345146 P
(43) Date of publication of application: 10.04.2019
(73) Proprietor: Corning Incorporated, Corning, New York 14831 (US)
(72) Inventor: KITTLESON, Andrew Peter, Honeoye Falls New York 14472 (US); KUDVA, Gautam Narendra, Horseheads New York 14845 (US); MILLER, Eric Lee, Corning New York 14830 (US); SIZEMORE, Brandon George, Lexington Kentucky 40513 (US)
(74) Representative: Elkington and Fife LLP
(86) International application number: PCT/US2017/035372
(87) International publication number: WO 2017/210385

(56) References cited:
- WO-A1-2014/052548
- WO-A1-2015/029888
- US-A- 3 543 979
- US-A1- 2013 134 199
- US-A1- 2015 259 236

## Description

### TECHNICAL FIELD

The present specification generally relates to apparatuses and methods for managing stress on a crack tip when separating a flexible glass ribbon.

### BACKGROUND

Glass manufacturing apparatus are commonly used to form various glass products for example LCD sheet glass. Glass substrates in flexible electronic applications are becoming thinner and lighter. Glass substrates having thicknesses lower than 0.5 mm, for example less than 0.3 mm, for example 0.1 mm or even thinner can be desirable for certain display applications, especially portable electronic devices for example laptop computers, handheld devices and the like. To achieve these smaller thicknesses, it is known to manufacture glass ribbon by downwardly flowing molten glass over a forming wedge and using edge rollers to engage beads formed at opposite edge portions of a glass ribbon. After attaining a final desired ribbon thickness in the quality portion thereof, the beads are removed by slitting the ribbon in a longitudinal direction. The manner of slitting the ribbon affects the strength of the edges on the quality portion of the ribbon which, in turn, affects the ability to use the ribbon for a desired purpose. There is thus desired improved manners of slitting a ribbon so as to attain a strong edge on the quality portion so that the ribbon may be used in desired applications for example in portable electronic devices, laptop computers, handheld devices and the like.
US2015/0259236 A1 discloses a method and apparatus for trimming a moving glass ribbon comprising a quality portion and an edge portion. The apparatus comprises a gas cushion support body for supporting the moving glass ribbon, a scribing device and a cutting device configured to separate the edge portion from the quality portion of the moving glass ribbon, a bypass apparatus configured to guide the separated edge portion along a second path different from the first path, the edge portion remaining connected to the moving glass ribbon; a cross scoring device to form a score in the quality portion in a direction perpendicular to a direction of travel of the quality portion; and a breaking apparatus configured to produce a tensile stress across the score.

### SUMMARY

The present concept involves managing mechanically induced stress on a crack tip when separating a flexible glass ribbon during an edge trim removal process. The edge trim may be removed from a central portion of the flexible glass ribbon in a continuous fashion by an edge trimming apparatus. The continuous strip of edge trim is then collected while the continuous strip of edge trim remains connected to the central portion of the flexible glass ribbon and can eliminate any need for handling relatively small pieces of thin flexible glass edge trim.

During edge trim removal, particularly during a laser cutting process, it can be desirable to control mechanically generated stress on the crack tip at the cutting location, such that the mechanically induced stresses do not overly influence crack tip formation, and thereby to improve edge quality. In other words, the thermal stress (for example as imparted by a laser beam and coolant jet) should be the primary driving stress which maintains crack tip propagation and stability, as opposed to mechanically induced stresses imparted by physical edge separation. However, edge separation of the edge trim from the central quality portion of the flexible glass ribbon is desirable to inhibit edge quality reduction by, for example, crack formation and propagation resulting from contact between the edges. Additionally, edge separation is desirable to avoid particle generation from the edges rubbing together, as such particles undesirably wind up on the major surfaces of the glass ribbon and may thereby inhibit the production of desired structures on the glass ribbon.

According to a first aspect, a method of managing mechanically induced stress on a crack tip comprises:
directing a flexible glass ribbon to an edge trimming apparatus including a cutting device, the flexible glass ribbon including a first broad surface and a second broad surface that extend laterally between a first edge and a second edge;
separating the first edge of the flexible glass ribbon as the flexible glass ribbon moves by the cutting device so as to form a continuous strip of edge trim connected to a central portion of the flexible glass ribbon at a crack tip;
detecting a width of a gap between the first edge and the central portion; and
controlling the width of the gap.

According to a second aspect, there is provided the method of aspect 1, wherein the separating further comprises directing a laser beam onto at least one of the first broad surface and the second broad surface.

According to a third aspect, there is provided the method of aspect 2, further comprising directing a cooling jet onto the at least one of the first broad surface and the second broad surface thereby cooling the flexible glass ribbon at a location proximate the laser beam.

According to a fourth aspect, there is provided the method of any one of aspects 1-3, wherein the step of detecting the width of the gap includes detecting the width of the gap at a predetermined distance downstream of the crack tip.

According to a fifth aspect, there is provided the method of aspect 4, wherein the predetermined distance is about 30 cm downstream from the crack tip.

According to a sixth aspect, there is provided the method of aspect 5, wherein the width of the gap at the predetermined distance is maintained below about 0.11 mm.

According to a seventh aspect, there is provided the method of any one of aspects 1-6, wherein detecting the width of the gap includes using a laser displacement sensor.

According to an eighth aspect, there is provided the method of any one of aspects 1-7, wherein controlling the width of the gap comprises doing so such that mechanically induced stress at the crack tip is maintained below 30 MPa.

According to an ninth aspect, an apparatus that manages mechanically induced stress on crack tip comprises:
a conveying assembly that directs a flexible glass ribbon in a conveying direction;
an edge trimming apparatus including a cutting device that receives the flexible glass ribbon and that separates a first edge of the flexible glass ribbon to form a continuous strip of edge trim connected to a central portion of the flexible glass ribbon at a crack tip;
a gap measurement device that provides a signal indicative of a width of a gap between the first edge and the central portion of the flexible glass ribbon; and
a gap adjustment device that adjusts the width of the gap between the strip of edge trim and the central portion based on the signal.

According to a tenth aspect, there is provided the apparatus of aspect 9, wherein the cutting device comprises a laser.

According to an eleventh aspect, there is provided the apparatus of aspect 10, further comprising a cooling fluid jet proximate the laser.

According to a twelfth aspect, there is provided the apparatus of any one of aspects 9-11, wherein the gap adjustment device detects the width of the gap at a predetermined distance downstream of the crack tip.

According to a thirteenth aspect, there is provided the apparatus of any one of aspects 9-12, wherein the predetermined distance is about 30 cm downstream from the crack tip.

According to a fourteenth aspect, there is provided the apparatus of aspect 13, wherein the width of the gap at the predetermined distance is maintained below about 0.11 mm.

According to a fifteenth aspect, there is provided the apparatus of any one of aspects 9-14, wherein the gap measurement device comprises a laser displacement sensor.

According to a sixteenth aspect, there is provided the apparatus of any one of aspects 9-15, wherein mechanical stress at the crack tip is maintained below 30 MPa.

According to a seventeenth aspect not according to the invention, a flexible glass structure has a thickness of at most about 0.3 mm and a cut edge formed by a laser cutting device in a continuous laser cutting process, the flexible glass structure having an as cut particle density of no more than about 0.0015 particles per cm² determined in accordance with Particle Density TEST # 1.

According to an eighteenth aspect not according to the invention, there is provided the apparatus of aspect 17, having an as cut particle density of no more than about 0.001 particles per cm² determined in accordance with Particle Density TEST # 1.

According to a nineteenth aspect not according to the invention, there is provided the apparatus of aspect 17, having an as cut particle density of no more than about 0.0005 particles per cm² determined in accordance with Particle Density TEST # 1.

Additional features and advantages will be set forth in the detailed description which follows, and in part will be readily apparent to those skilled in the art from the description or recognized by practicing the embodiments as exemplified in the written description and the appended drawings and as defined in the appended claims. It is to be understood that both the foregoing general description and the following detailed description are merely exemplary, and are intended to provide an overview or framework to understanding the nature and character of the claims.

The accompanying drawings are included to provide a further understanding of principles of the present disclosure, and are incorporated in and constitute a part of this specification. The drawings illustrate one or more embodiment(s), and together with the description serve to explain, by way of example, principles and operation of the embodiments described herein. It is to be understood that various features disclosed in this specification and in the drawings can be used in any and all combinations.

### BRIEF DESCRIPTION OF THE DRAWINGS

FIG. 1 is a partial view of an apparatus for processing a flexible glass ribbon, according to some embodiments;
FIG. 2 is a section view along line 2-2 of FIG. 1 illustrating a cutting support member with an upwardly extending convex support surface, according to some embodiments;
FIG. 3 illustrates a schematic view of an apparatus for processing a flexible glass ribbon according to some embodiments;
FIG. 4 illustrates a gap measurement device for use in some embodiments, including the apparatus of FIG. 1;
FIG. 5 illustrates a schematic view of a gap adjustment device for use in some embodiments, including the apparatus of FIG. 1; and
FIG. 6 illustrates graph showing an exemplary correlation between gap width at a predetermined location downstream of a crack tip and corresponding mechanically induced stress due to toe out at the crack tip, as well as an exemplary correlation between gap width at two different distances downstream from the crack tip.

### DETAILED DESCRIPTION

Embodiments described herein generally relate to apparatuses and methods for managing mechanically induced stress on a crack tip when separating a flexible glass ribbon by controlling lateral motion of edge strips of the flexible glass removed from a central quality portion of the flexible glass ribbon in a laser cutting process. As described herein, numerical and analytical models may be used to define a relationship between a gap or "toe out" between an edge of the edge strip and an edge of the quality portion of the flexible glass ribbon, and how that gap relates to a mechanically induced stress at the crack tip. Using this modeling data, a measurement system is provided that is capable of measuring the gap continuously in a steady-state run condition. This measurement can, in turn, be used to close steering control loops, which define the lateral position of the edge strip relative to the central quality portion (i.e., the amount of toe-out or gap) at the crack tip and generally downstream of laser separation.

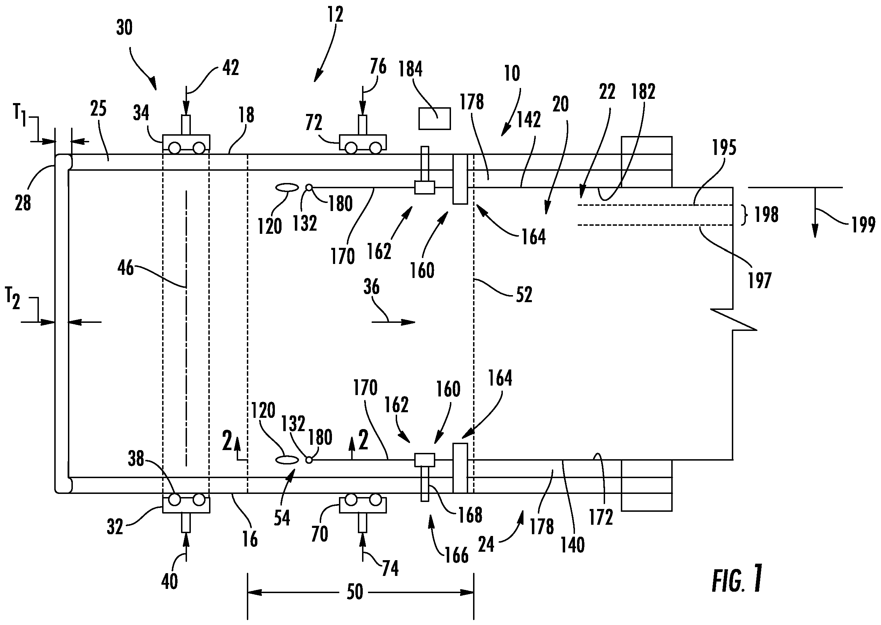

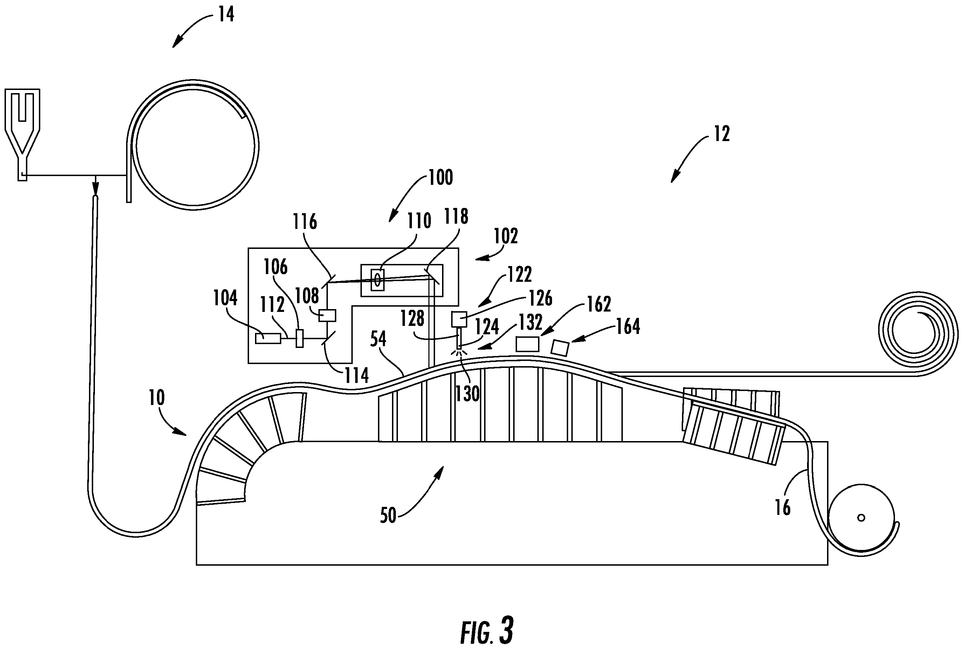

Referring to FIG. 1, a flexible glass ribbon 10 is illustrated being conveyed through a glass processing apparatus 12, only a portion of which is illustrated by FIG. 1. The flexible glass ribbon 10 may be conveyed in a continuous fashion from a glass ribbon source 14 (FIG. 3) through the glass processing apparatus 12. The glass ribbon source 14 may be either a forming process, or may be a roll of glass. The flexible glass ribbon 10 includes a pair of opposed first and second edges 16 and 18 that extend along a length of the flexible glass ribbon 10 and a central portion 20 that spans between the first and second edges 16 and 18. In some embodiments, the first and second edges 16 and 18 may be covered in an adhesive tape 25 that is used to protect and shield the first and second edges 16 and 18 from contact. The tape 25 may be applied to one or both of the first and second edges 16 and 18 as the flexible glass ribbon 10 moves through the apparatus 12. A first broad surface 22 and an opposite, second broad surface 24 also span between the first and second edges 16 and 18, forming part of the central portion 20. Typically, the tape 25 would be applied to edges of a glass ribbon 10 that has been cut already, i.e., after beads 26, 28 have been removed. However, the tape 25 may also be applied to a glass ribbon 10 having beads 26, 28 as shown.

In embodiments where the flexible glass ribbon 10 is formed using a down draw fusion process, which is shown in part in FIG. 3, the first and second edges 16 and 18 may include beads 26 and 28 with a thickness T₁ that is greater than a thickness T₂ within the central portion 20. The central portion 20 may be "ultra-thin" having a thickness T₂ of about 0.3 mm or less, or may be up to 0.5 mm, including but not limited to thicknesses of, for example, from about 0.01 to about 0.5, from about 0.01 to about 0.4, from about 0.01 to about 0.3 mm, from about 0.01 to about 0.275 mm, from about 0.01 to about 0.25 mm, from about 0.01 to about .225 mm, from about 0.01 to about 0.2 mm, from about 0.01 to about .175 mm, from about 0.01 to about .15 mm, from about 0.01 to about .125 mm, from about 0.01 to about .1 mm, from about 0.01 to about .075 mm, from about 0.01 to about .05 mm, from about 0.01 to about .025 mm, from about 0.025 to about 0.5 mm, from about 0.05 to about 0.5 mm, from about 0.075 to about 0.5 mm, from about 0.1 to about 0.5 mm, from about 0.125 to about 0.5 mm, from about 0.15 to about 0.5 mm, from about 0.175 to about 0.5 mm, from about 0.2 to about 0.5 mm, from about 0.225 to about 0.5 mm, from about 0.25 to about 0.5 mm, from about 0.275 to about 0.5 mm, from about 0.025 to about 0.275 mm, from about 0.5 to about 0.25 mm, from about 0.75 to about 0.225 mm, from about 0.1 to about 0.2 mm, from about 0.125 to about 0.175 mm, although flexible glass ribbons 10 with other thicknesses may be formed in other examples.

The flexible glass ribbon 10 is conveyed through the apparatus 12 using a conveyor system 30 (FIG. 1). Lateral guides 32 and 34 may be provided to orient the flexible glass ribbon 10 in the correct lateral position relative to the machine or travel direction 36 of the flexible glass ribbon 10. For example, as schematically shown, the lateral guides 32 and 34 may include rollers 38 that engage the first and second edges 16 and 18. Opposed forces 40 and 42 may be applied to the first and second edges 16 and 18 using the lateral guides 32 and 34 that help to shift and align the flexible glass ribbon 10 in the desired lateral orientation in the travel direction 36.

As further illustrated, the lateral guides 32 and 34 can engage the first and second edges 16 and 18 on the tape 25 without engaging the central portion 20 of the flexible glass ribbon 10. As such, the pristine or quality surfaces of the opposed first and second broad surfaces 22 and 24 of the central portion 20 of the flexible glass ribbon 10 can be maintained while avoiding undesired scratching or other surface contamination that might otherwise occur if the lateral guides 32 and 34 were to engage either of the first and second broad surfaces 22 and 24 of the central portion 20. Moreover, the lateral guides 32 and 34 may engage the flexible glass ribbon 10 as it is being bent about an axis 46 transverse to the travel direction 36 of the flexible glass ribbon 10. Bending the flexible glass ribbon 10, can increase the rigidity of the glass ribbon 10 throughout the bend. As such, the lateral guides 32 and 34 can engage the glass ribbon 10 in a bent condition. The forces 40 and 42 applied by the lateral guides 32 and 34 are therefore less likely to buckle or otherwise disturb the stability of the glass ribbon profile when laterally aligning as the flexible glass ribbon 10.

The apparatus 12 can further include a cutting zone 50 downstream from the axis 46. In one example, the apparatus 12 may include a cutting support member 52 configured to bend the flexible glass ribbon 10 in the cutting zone 50 to provide a bent target segment 54 with a bent orientation. Bending the target segment 54 within the cutting zone 50 can help stabilize the flexible glass ribbon 10 during the cutting procedure. Such stabilization can help prevent buckling or disturbing the flexible glass ribbon profile during the procedure of separating at least one of the first and second edges 16 and 18 from the central portion 20 of the flexible glass ribbon 10.

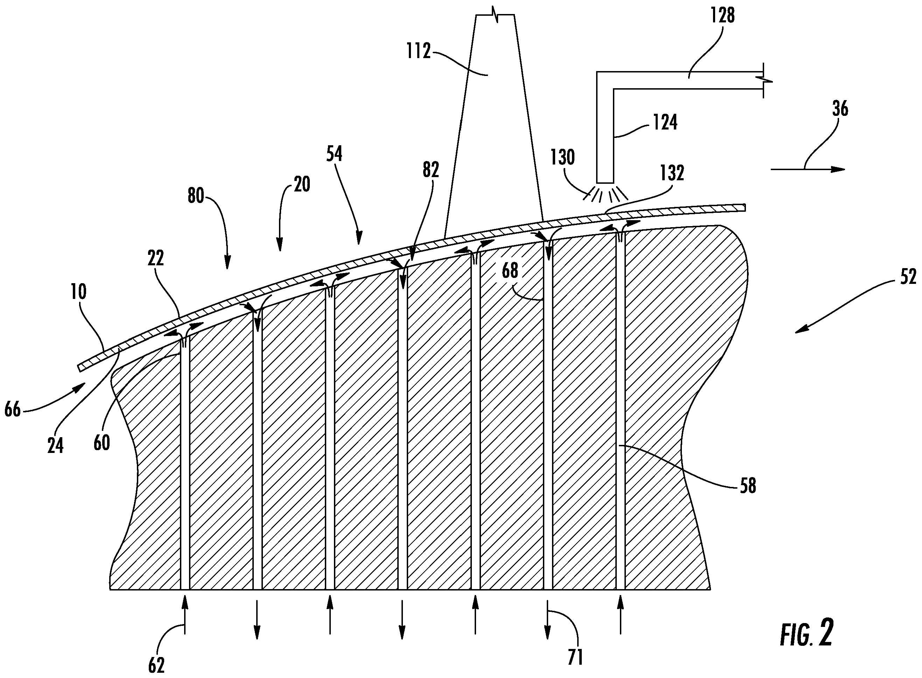

The cutting support member 52 can comprise a non-contact support member designed to support the glass ribbon 10 without touching the first and second broad surfaces 22 and 24 of the flexible glass ribbon 10. For example, referring to FIG. 2, the non-contact cutting support member 52 can comprise one or more curved air bars configured to provide a cushion of air to space between the flexible glass ribbon 10 and the cutting support member 52 to prevent the central portion 20 of the flexible glass ribbon 10 from contacting the cutting support member 52.

Referring briefly to FIG. 2, the cutting support member 52 can be provided with a plurality of passages 58 configured to provide positive pressure ports 60 such that an air stream 62 can be forced through the positive pressure ports 60 toward the bent target segment 54 to create an air cushion 66 for non-contact support of the bent target segment 54. Optionally, the plurality of passages 58 can include negative pressure ports 68 such that an air stream 71 can be drawn away from the bent target segment 54 to create a suction to partially counteract the force from the air cushion 66 created by the positive pressure ports 64. A combination of positive and negative pressure ports can help stabilize the bent target segment 54 throughout the cutting procedure. Indeed, the positive pressure ports 64 can help maintain the desired air cushion 66 height between the central portion 20 of the flexible glass ribbon 10 and the cutting support member 52. At the same time, the negative pressure ports 68 can help pull the flexible glass ribbon 10 toward the cutting support member 52 to prevent the flexible glass ribbon 10 from undulating or having portions of the bent target segment 54 from floating away from other portions of the target segment 54 when traversing over the cutting support member 52 in the travel direction 36.

Providing the bent target segment 54 in the cutting zone 50 can also increase the rigidity of the flexible glass ribbon 10 throughout the cutting zone 50. As such, as shown in FIG. 1, optional lateral guides 70, 72 can engage the flexible glass ribbon 10 in a bent condition as the flexible glass ribbon 10 passes over the cutting support member 52 within the cutting zone 50. Forces 74 and 76 applied by the lateral guides 70 and 72 are therefore less likely to buckle or otherwise disturb the stability of the glass ribbon profile when laterally aligning as the flexible glass ribbon 10 passes over the cutting support member 52. The optional lateral guides 70 and 72 can therefore be provided to fine tune the bent target segment 54 at the proper lateral orientation along a direction of the axis 46 transverse to the travel direction 36 of the flexible glass ribbon 10.

As set forth above, providing the bent target segment 54 in a bent orientation within the cutting zone 50 can help stabilize the flexible glass ribbon 10 during the cutting procedure. Such stabilization can help prevent buckling or disturbing the glass ribbon profile during the procedure of separating at least one of the first and second edges 16 and 18. Moreover, the bent orientation of the bent target segment 54 can increase the rigidity of the bent target segment 54 to allow optional fine tune adjustment of the lateral orientation of the bent target segment 54. As such, the flexible glass ribbon 10 can be effectively stabilized and properly laterally oriented without contacting the first and second broad surfaces 22 and 24 of the central portion 20 during the procedure of separating at least one of the first and second edges 16 and 18.

Increased stabilization and rigidity of the bent target segment 54 of the flexible glass ribbon 10 can be achieved by bending the target segment 54 to include an upwardly convex surface and/or an upwardly concave surface along a direction of the axis 46. For example, as shown in FIG. 2, the bent target segment 54 includes a bent orientation with an upwardly facing convex surface 80. Examples of the disclosure can involve supporting the bent target segment 54 with an upwardly facing convex support surface 82 of the cutting support member 52, for example the illustrated air bar. Providing the cutting support member 52 with an upwardly facing convex support surface 82 can likewise bend the flexible glass ribbon 10 in the cutting zone 50 to achieve the illustrated bent orientation.

The apparatus 12 can further include a wide range of edge trimming apparatus configured to separate the first and second edges 16 and 18 from the central portion 20 of the glass ribbon 10. In one example, as shown in FIG. 3, edge trimming apparatus 100 can include an optical delivery apparatus 102 for irradiating and therefore heating a portion of the upwardly facing surface of the bent target segment 54. In one example, optical delivery apparatus 102 can comprise a cutting device for example the illustrated laser 104 although other radiation sources may be provided in further examples. The optical delivery apparatus 102 can further include a circular polarizer 106, a beam expander 108, and a beam shaping apparatus 110.

The optical delivery apparatus 102 may further comprise optical elements for redirecting a beam of radiation (e.g., laser beam 112) from the radiation source (e.g., laser 104), for example mirrors 114, 116 and 118. The radiation source can comprise the illustrated laser 104 configured to emit a laser beam having a wavelength and a power suitable for heating the flexible glass ribbon 10 at a location where the beam is incident on the flexible glass ribbon 10. In one embodiment, laser 104 can comprise a CO₂ laser although other laser types may be used in further examples.

The laser 104 may initially emit the laser beam 112 with a substantially circular cross section (i.e. the cross section of the laser beam at right angles to the longitudinal axis of the laser beam). The optical delivery apparatus 102 transforms laser beam 112 such that the beam 112 has a significantly elongated shape when incident on glass ribbon 10. As shown in FIG. 1, the elongated shape can produce an elongated radiation zone 120 that may include the illustrated elliptical footprint although other configurations may be provided in further examples. The elliptical foot print can be positioned on the upwardly facing surface (either convex or concave) of the bent target segment.

The boundary of the elliptical footprint can be determined as the point at which the beam intensity has been reduced to 1/e² of its peak value. The laser beam 112 passes through circular polarizer 106 and is then expanded by passing through beam expander 108. The expanded laser beam 112 then passes through beam shaping apparatus 110 to form a beam producing the elliptical footprint on a surface of the bent target segment 54. The beam shaping apparatus 110 may, for example, comprise one or more cylindrical lenses. However, it should be understood that any optical elements capable of shaping the beam emitted by laser 104 to produce an elliptical footprint on the bent target segment 54 may be used.

The elliptical footprint can include a major axis that is substantially longer than a minor axis. In some embodiments, for example, major axis is at least about ten times longer than minor axis. However, the length and width of the elongated radiation zone are dependent upon the desired separating speed, desired initial crack size, thickness of the glass ribbon, laser power, etc., and the length and width of the radiation zone may be varied as needed.

As further shown in FIG. 3, the example edge trimming apparatus 100 can also include a coolant fluid delivery apparatus 122 for cooling the heated portion of the upwardly facing surface of the bent target segment 54. The coolant fluid delivery apparatus 122 can comprise a coolant nozzle 124, a coolant source 126 and an associated conduit 128 that may convey coolant to the coolant nozzle 124.

With reference to FIGS. 1-3, the coolant nozzle 124 can be configured to deliver a coolant jet 130 of coolant fluid to the upwardly facing surface of the bent target segment 54. The coolant nozzle 124 can have various internal diameters to form a cooling zone 132 of a desired size. As with elongated radiation zone 120, the diameter of coolant nozzle 124, and the subsequent diameter of coolant jet 130, may be varied as needed for the particular process conditions. In some embodiments, the area of the glass ribbon immediately impinged upon by the coolant (cooling zone 132) can have a diameter shorter than the minor axis of the radiation zone 120. However, in certain other embodiments, the diameter of the cooling zone 132 may be larger than the minor axis of elongated radiation zone 120 based on process conditions for example glass ribbon traveling speed, glass thickness, laser power, etc. Indeed, the (cross sectional) shape of the coolant jet may be other than circular, and may, for example, have a fan shape such that the cooling zone forms a line rather than a circular spot on the surface of the glass ribbon. A line-shaped cooling zone may be oriented, for example, perpendicular to the major axis of elongated radiation zone 120. Other shapes may be beneficial in certain circumstances.

In one example, the coolant jet 130 comprises water, but may be any suitable cooling fluid (e.g., liquid jet, gas jet or a combination thereof) that does not stain or damage the upwardly facing surface of the bent target segment 54 of the flexible glass ribbon 10. The coolant jet 130 can be delivered to a surface of the flexible glass ribbon 10 to form the cooling zone 132. As shown, the cooling zone 132 can trail behind the elongated radiation zone 120 to propagate an initial crack or crack tip 180 formed by aspects of the disclosure described more fully below.

The combination of heating and cooling with the optical delivery apparatus 102 and the coolant fluid delivery apparatus 122 can effectively induce thermal stress to separate the first and second edges 16 and 18 from the central portion 20 while minimizing or eliminating undesired residual stress, microcracks or other irregularities in the opposed edges 140, 142 of the central portion 20 that may be formed by other separating techniques. Moreover, due to the bent orientation of the bent target segment 54 within the cutting zone 50, the glass ribbon 10 can be properly positioned and stabilized to facilitate precise separating of the first and second edges 16 and 18 respectively from the first and second edges 140, 142 during the separating process. Still further, due to the convex surface topography of the upwardly facing convex support surface, the continuous strips of edge trim 176 and 178 can travel away from the central portion 20 (in an out of plane direction and/or laterally in an in-plane direction), thereby reducing the probability that the first and second edges 16 and 18 will subsequently engage (and therefore damage) the first and second broad surfaces 22 and 24 and/or the high quality opposed edges 140, 142 of the central portion 20.

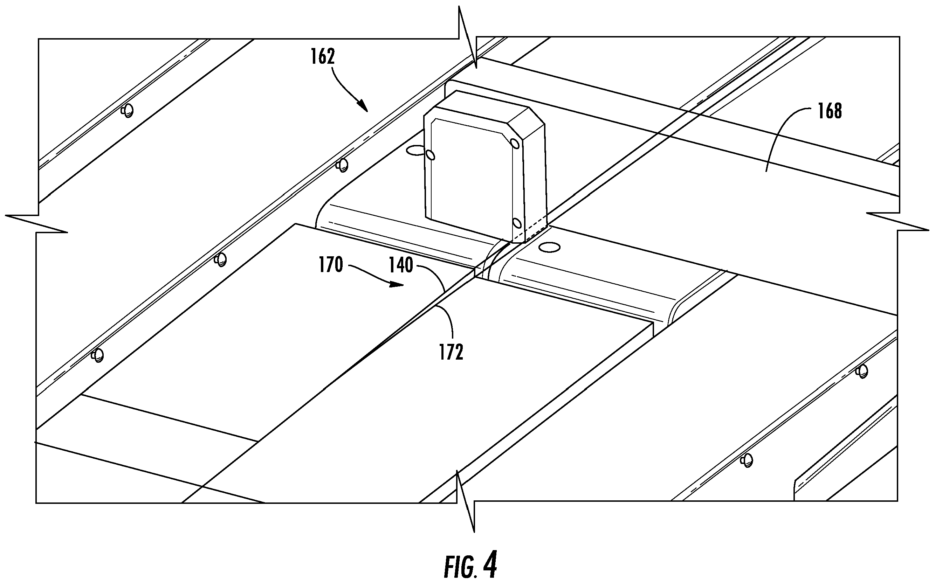

Referring to FIGS. 1 and 4, the glass processing apparatus 12 further includes a gap measurement and adjustment apparatus 160 that includes a gap measurement device 162 and a gap adjustment device 164. The gap measurement device 162 may be supported by a support assembly 166 that includes a support arm 168 that positions the gap measurement device 162 over a gap 170 between cut edges 172 and 140 of the edge trim 176 and the central portion 20, respectively. In other embodiments, the gap measurement device 162 may be positioned below the gap 170 by the support arm 168. Whether above or below the gap 170, the gap measurement device is configured to intermittently or continuously measure the width of the gap 170 between the edges of the edge trim 176 and the central portion 20 in the cross-machine direction, i.e., in the direction of axis 46 (i.e., in a lateral, in-plane direction). A suitable gap measurement device 162 may include an LJ series laser displacement sensor commercially available from Keyence Corporation. It should be noted that while the gap measurement device 162 and gap adjustment device may be described primarily in connection with cut edges 172 and 140 and edge trim 176, their description and operation may apply equally with respect to cut edges 182 and 142 and edge trim 178.

The width of the gap 170 is measured at a location downstream of the cutting zone 50 where crack tip formation occurs, which is shown more clearly by FIG. 4. Measuring at a predetermined distance downstream of the crack tip 180 (e.g., about 12 cm (5 inches) or more, for example about 20 cm (8 inches) or more, for example about 30.4 cm (12 inches) or more, for example from about 12 to about 38 cm (about 5 inches to about 15 inches)) can provide a more measurable gap 170 between cut edges 172 and 140 of the edge trim 176 and the central portion 20 since the gap 170 may widen at locations downstream from the crack tip 180. In some embodiments, it may be desirable to measure the width of the gap 170 at a position closer to the crack tip 180.

Referring again to FIG. 1, the gap measurement and adjustment apparatus 160 further includes a controller 184 (e.g., a proportional-integral-derivative (PID) controller) that receives a signal or input from the gap measurement device 162 that is indicative of width of the gap 170 at the predetermined location. The controller 184 then adjusts a position of the gap adjustment device 164 to thereby adjust a position of the edge trim 176 relative to the central portion 20 in the cross-machine direction. This adjustment of the edge trim 176 relative to the central portion 20 results in a change in the width of the gap 170 measured by the gap measurement device 162, which, in turn, adjusts the amount of toe out at the crack tip 180. This process may be repeated continuously or intermittently to adjust the width of the gap 170 at the predetermined distance from the crack tip, wherein the adjustment moves the amount of the gap toward a predetermined gap width that is saved in memory of the controller 184. The amount of the predetermined gap may vary based on the glass thickness, the width of the central portion, and/or other processing parameters. Alternatively, or in addition, the memory could store a look-up table having predetermined gaps that correspond to a particular desired mechanically induced stress levels as explained further below.

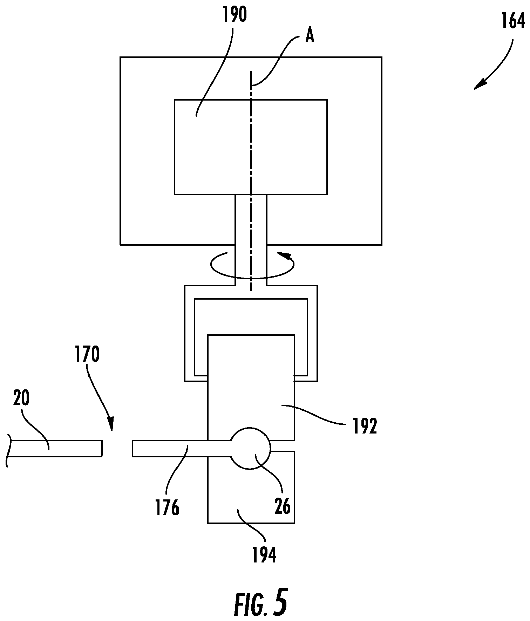

Referring briefly to FIG. 5, the gap adjustment device 164 may include a motor 190 that controls angular position of a roller 192 (e.g., a top roller of a pinch roller set that also includes a bottom roller 194) about a pivot axis A. The roller 192 may be rubberized or otherwise formed with a compliant material that can grip the bead 26 and change the lateral orientation of the edge trim 176 through turning of the roller 192 about the pivot axis A in response to a command from the controller 184. Changing the lateral position of the edge trim 176 relative to the central portion 20 of the flexible glass ribbon 18 also affects the width of the gap 170 at the gap measurement device 162 and the degree of toe out at the crack tip 180. In some embodiments the top roller 192 is driven, whereas the bottom roller 194 is an idle roller that rotates from contact with the glass ribbon 18. Although FIG. 5 shows rollers 192, 194 as engaging the edge trim 176, similar rollers may be used in other embodiments to engage the edge of central portion 20 to more accurately control the width of the gap 170. Additionally, although FIG. 5 shows the rollers 192, 194 for one edge portion (including 16, 26, 140, 176) of the glass ribbon, a similar arrangement of rollers may be used on the other edge portion (including 18, 28, 142178) of the glass ribbon.

Controlling the gap 170 can produce high quality edges on the central portion 20 of the glass ribbon. In embodiments, controlling the gap 170 can reduce the effect that mechanically induced stresses have at the crack tip, thereby allowing the thermally induced stresses to propagate the crack tip, which results in higher quality edges. Alternatively, or in addition, controlling the gap 170 can reduce the undesirable effects produced from the edge trim 176, 178 rubbing against the edges 140, 142 of the central portion 20, namely, physical damage to the edges 140, 142 from the contact, and/or the generation of particles that undesirably adhere to the broad surfaces 22, 24 of the central portion.

First, controlling the gap 170 can reduce the effect that mechanically induced stresses have at the crack tip. Without wishing to be bound by theory, the width of the gap or toe out at the crack tip 180 can provide an indication of mechanically induced stress due to ribbon separation. The ribbon separation at the crack tip 180 can be almost exclusively an in-plane separation as the edge trim 176 may remain in the same plane of the central portion 20 until farther downstream of the crack tip 180. In some embodiments, gap measurement device 162 is located about 12 in (about 30.4 cm) downstream from the crack tip 180, and measures the in-plane separation. In other embodiments the edge trim 176 is moved out of the plane of the central portion 20 almost immediately downstream from the location of the crack tip 180, for example about 25 mm downstream of the crack tip 180; in such cases, controlling the toe out or gap is still beneficial in managing mechanically induced stresses at the crack tip, particularly so that the mechanically induced stress does not adversely affect edge quality and/or thermally induced stresses that beneficially separate the glass ribbon and that result in high edge quality.

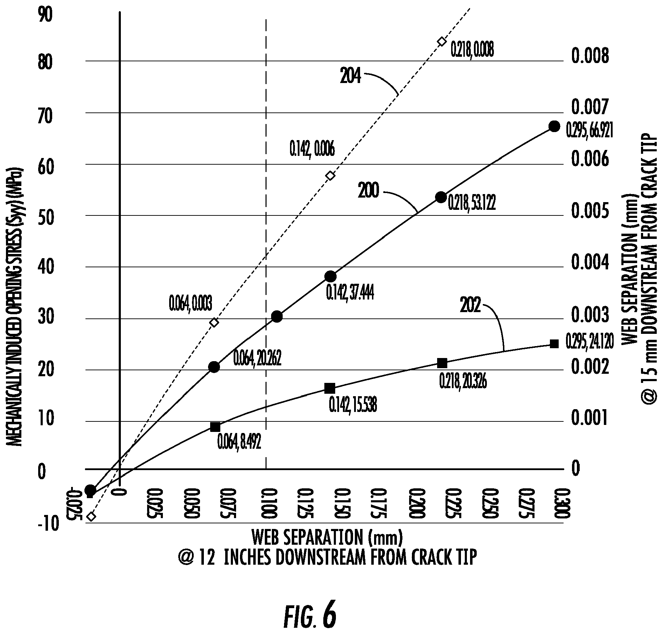

Referring to FIG. 6, a graph is illustrated showing an exemplary correlation between gap width (in mm, along the X-axis) at a predetermined location downstream of the crack tip 180 (e.g., 12 in) and mechanically induced stress (in MPa, along the left-hand Y-axis) due to toe out at the crack tip 180.

In this example, two plots are illustrated for mechanically induced stresses on opposite sides (top or first broad surface 22, i.e., the surface on which the laser beam 112 and coolant jet 130 impinge, and bottom or second broad surface 24, i.e., the surface on which air streams 62 impinge) of the ribbon because the mechanically induced stresses can be different at these locations depending, at least in part, on the processes used. Plot line 200 illustrates mechanically induced stress (in MPa, on the left-hand Y-axis) at the crack tip at the bottom side of the flexible glass ribbon 10 when the web separation (gap 170, in mm as shown on the X-axis) is measured at a position of 12 inches (about 30.4 cm) downstream of the crack tip. Plot line 202 illustrates mechanically induced stress (in MPa, on the left-hand Y-axis) at the crack tip at the opposite, top side, of the flexible glass ribbon 10 when the web separation (gap 170, in mm as shown on the X-axis) is measured at a position 12 inches (about 30.4 cm) downstream of the crack tip. In this example, mechanically induced stress is generally greater along plot line 200 than along plot line 202, illustrating that the mechanically induced crack tip stress is greater at the bottom of the flexible glass ribbon 10 than it is at the top of the flexible glass ribbon 10, at the same location downstream of the crack tip. Thus, a target gap width at the predetermined location can be identified for a particular mechanically induced stress. For example, to maintain a target stress of about 30 MPa, it can be seen that a gap of about 100 µm (about 0.100 mm, as measured at a point 12 inches (30.4 cm) downstream from the crack tip) should be maintained using the gap measurement and adjustment apparatus 160. Any suitable target stress can be selected, for example less than about 100 MPa, for example less than about 70 MPa, for example less than about 50 MPa, for example less than about 30 MPa, for example less than about 25 MPa. For 100 micron thick glass, it was found that maintaining the mechanically induced stresses below about 30 MPa produced high quality edges from the laser separation. That is, a mechanically induced stress of about 30 MPa or less allowed the thermally induced stress (from the laser and coolant jet) to open the crack tip 180, thereby producing high quality edges 140, 142 on the central portion 20 (quality web, or desired web). When mechanically induced stresses exceeded 30 MPa, the quality of edges 140, 142 is degraded, because the mechanically induced stresses start to overwhelm the thermally induced stresses at the crack tip.

Further, FIG. 6 illustrates the correlation between various distances downstream from the crack tip. That is, although the gap 170 width was measured at a point 12 inches (about 30.4 cm) downstream from the crack tip, such was done for convenience based on the physical arrangement of the equipment used (both that used to measure gap width and that used to sever the glass ribbon), and need not be the case. Instead, the gap width measured at a particular point downstream may be correlated (for example based on Pythagorean theorem or finite element analysis(FEA)). The relationship between gap width at various distances downstream of the crack tip and the mechanically induced stress at the crack tip can be predicted for example, using FEA, as shown in FIG. 6. Plot line 204 illustrates web separation (gap 170 width) at a position that is 15 mm downstream of the crack tip (righthand Y-axis) versus web separation 12 inches downstream of the crack tip (X-axis). That is, the mechanically induced stress (about 20 MPa) from a gap width of 0.064 mm as measured at a point 12 inches (30.4 cm) downstream from the crack tip is equivalent to the mechanically induced stress from a gap width of 0.003 mm as measured at a point 15 mm downstream from the crack tip. As can be seen from FIG. 6, the gap distance as measured near the crack tip (15 mm) is significantly smaller than that measured at a distance (12 inches) farther from the crack tip, but both mechanically induce the same stress at the crack tip. By way of further example, a gap of about 100 microns (0.1 mm) as measured at a distance of 12 inches (about 30.4 cm) downstream of the crack tip produces a stress of about 30 MPa according to line 200, but the gap as measured at a distance of 15 mm downstream of the crack tip is only about 0.004 mm (see the points where the vertical dashed line crosses each the plot lines 200 and 204). Because maintaining adequate separation near the crack tip (so as to reduce particle generation, as discussed below) is balanced against increasing stress at the crack tip, the primary interest in the amount of gap separation is near the crack tip. Thus, the gap width at a point 15 mm downstream of the crack tip is of interest but, again, it may not be practical to measure the gap width at that point due to physical machine constraints. Accordingly, one may measure the gap width at a different distance downstream of the crack tip and correlate that to a particular gap width as measured nearer to the crack tip (for example, at 15 mm downstream of the crack tip).

Second, controlling the gap 170 can reduce the undesirable effects produced from the edge trim 176, 178 rubbing against the edges 140, 142 of the central portion 20. As indicated above, separating the edge trim 176 from the central portion 20 laterally has advantages of reducing defects (in the edges of the central or quality portion, for example) and reducing glass particles (that disadvantageously stick to the broad surfaces of the central or quality portion, for example) due to contact between the cut edges after laser separation.

Particles having a size on the order of 20 microns are of interest to the electronic display industry. That is, display pixels are of such a size that particles on the order of 20 microns noticeably affect the pixel performance in an undesired manner. Accordingly, the density of particles on the order of 20 microns is typically measured for glass substrates. Particle density per unit area can be determined using any suitable flat display glass inspection system, for example as commercially available from Dr. Schenk GmbH. Particle densities are greatest adjacent the cut edges of the central portion 20, which portion is not likely to wind up in an end use device anyway. Thus, measuring particle density directly at the edges is not necessarily advantageous. Instead, with reference to FIG. 1, and according to Particle Density TEST #1 as described here, it is more useful to measure particle density in a zone 198 that extends over the length of the glass ribbon 18 in the direction of arrow 36 and that is bounded by dashed lines 195 and 197. Line 195 is parallel to and offset from the second edge 142 of the central portion 20 by a distance of 20 mm in the direction of arrow 199 toward the center of the glass ribbon. Similarly, line 197 is parallel to and offset from the second edge 142 by a distance of 70 mm in the direction of arrow 199. Accordingly zone 198 is a 50 mm wide stripe extending along the length of the ribbon, and it is in this zone that particles are counted. Particles having a size on the order of 20 microns are counted, and the value is normalized according to area sampled so as to give a particle density per unit area. According to Particle Density Test #1, the number of particles per square centimeter is measured by counting the number of particles (having a size on the order of 20 microns) in zone 198 over a window length of several centimeters along the length of the ribbon. The number of particles (having a size on the order of 20 microns) is then divided by the area sampled (in cm) to provide a number of particles per square centimeter. For example, if 1000 particles (having a size on the order of 20 microns) were counted in an area bounded by lines 197, 198 (spaced by 5 cm, or 50 mm, as described) and a length of 1000 cm along the length of the web, the particle density would be 0.2 particles per cm². Particle density may also be measured in a similar zone adjacent to first edge 140 of the central portion 20. Particle densities herein were measured with a GlassInspect system having particle counting capability from Dr. Schenk GmbH. The camera resolution was a 20 micron square pixel oriented so that the sides of the square pixel were oriented generally in the cross-web and length of the web directions.

By controlling the gap 170 as described above, when severing a glass ribbon into a central portion and strips of edge trim, the inventors obtained (immediately after severing the edge trim, i.e., before washing) a particle density in zone 198, according to Particle Density TEST # 1, of less than about 0.0015 particles per cm², in some embodiments less than about 0.001 particles per cm², and in other embodiments less than about 0.0005 particles per cm², wherein particles having a size of 20 microns or greater were measured. The thickness of the glass ribbon was 100 microns, and the width of the central portion (i.e., distance in direction of arrow 199 from second edge 142 to first edge 140) was 2600 mm.

In light of the above, controlling the amount of the gap 170 is a delicate balance. That is, a sufficient amount of gap is desirable to prevent the edge trim from rubbing against the edges of the central portion, and generating unwanted particles and/or edge damage from physical contact. However, if the amount of the gap 170 is too large, then mechanically induced stress at the crack tip can disadvantageously disturb the thermally induced stresses resulting in poor edge quality on the central portion. In some embodiments, it is desirable to operate the severing operation at a minimum amount of gap, i.e., just enough to minimize the generation of unwanted particles, thereby minimizing the amount of mechanically induced stress at the crack tip.

In the above detailed description, for purposes of explanation and not limitation, example embodiments disclosing specific details are set forth to provide a thorough understanding of various principles of the present description. However, it will be apparent to one having ordinary skill in the art, having had the benefit of the present disclosure, that embodiments described herein may be practiced in other variations that depart from the specific details disclosed herein. Moreover, descriptions of well-known devices, methods and materials may be omitted so as not to obscure the description of various principles. Finally, wherever applicable, like reference numerals refer to like elements.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the singular forms "a," "an" and "the" include plural referents unless the context clearly dictates otherwise. Thus, for example, reference to a "component" includes aspects having two or more such components, unless the context clearly indicates otherwise.

For example, although the methods of, and apparatus for, managing mechanically induced stresses at a crack tip were described in the context of separating an edge (that may include a bead) portion from a central portion, such methods and apparatus may be used to separate different portions of the quality area itself as in a slitting operation. For example, a slitting operation may separate one or more quality portions of smaller width from a central portion of a ribbon having a wider quality portion. That is, the "edge" trimmed from the central area of the ribbon may or may not include a bead and, thus, the strip of edge trim may be a desired portion of the ribbon itself to be used in manufacturing other devices, for example, consumer electronic devices, photovoltaic devices, or electrochemical energy storage devices.

## Claims

1. A method of managing mechanical stress on a crack tip comprising:
directing a flexible glass ribbon to an edge trimming apparatus including a cutting device, the flexible glass ribbon comprising a first broad surface and a second broad surface that extend laterally between a first edge and a second edge;
separating the first edge of the flexible glass ribbon as the flexible glass ribbon moves by the cutting device so as to form a strip of edge trim connected to a central portion of the flexible glass ribbon at a crack tip;
detecting a width of a gap between the first edge and the central portion; and
controlling the width of the gap.

2. The method of claim 1, wherein the separating further comprises directing a laser beam onto at least one of the first broad surface and the second broad surface.

3. The method of claim 2 further comprising directing a cooling jet onto the at least one of the first broad surface and the second broad surface thereby cooling the flexible glass ribbon at a location proximate the laser beam.

4. The method of any of claims 1-3, wherein the step of detecting the width of the gap includes detecting the width of the gap at a predetermined distance downstream of the crack tip.

5. The method of claim 4, wherein the predetermined distance is about 30 cm downstream from the crack tip.

6. The method of claim 5, wherein the width of the gap at the predetermined distance is maintained below about 0.11 mm.

7. The method of any of claims 1-3, wherein detecting the width of the gap comprises using a laser displacement sensor.

8. The method of any of claims 1-7, wherein controlling the width of the gap comprises maintaining mechanically induced stress at the crack tip below 30 MPa.

9. An apparatus (12) that manages mechanically induced stress on a crack tip comprising:
a conveying assembly that directs a flexible glass ribbon (10) in a conveying direction;
an edge trimming apparatus (100) including a cutting device that receives the flexible glass ribbon and that separates a first edge (16) of the flexible glass ribbon to form a continuous strip of edge trim connected to a central portion of the flexible glass ribbon at a crack tip;
a gap measurement device (162) that provides a signal indicative of a width of a gap between the first edge and the central portion of the flexible glass ribbon; and
a gap adjustment device (164) that adjusts the width of the gap between the strip of edge trim and the central portion based on the signal.

10. The apparatus of claim 9, wherein the cutting device comprises a laser.

11. The apparatus of claim 10 further comprising a cooling fluid jet proximate the laser.

12. The apparatus of any of claims 9-11, wherein the gap adjustment device detects the width of the gap at a predetermined distance downstream of the crack tip.

13. The apparatus of claim 12, wherein the predetermined distance is about 30 cm downstream from the crack tip.

14. The apparatus of claim 13, wherein the width of the gap at the predetermined distances is maintained below 0.11 mm.

15. The apparatus of any of claims 9-11, wherein the gap measurement device comprises a laser displacement sensor.

16. The apparatus of any of claims 9-15, wherein mechanical stress at the crack tip is maintained below 30 MPa.

## Patentansprüche

1. Verfahren zur Verwaltung von mechanischem Stress auf einer Rissspitze, umfassend:
ein Richten eines flexiblen Glasbands zu einer Kantenbeschnittvorrichtung, enthaltend eine Schnittvorrichtung, wobei das flexible Glasband eine erste breite Fläche und eine zweite breite Fläche umfasst, die sich lateral zwischen einer ersten Kante und einer zweiten Kante erstrecken;
ein Trennen der ersten Kante des flexiblen Glasbands, während sich das flexible Glasband durch die Schnittvorrichtung so bewegt, dass ein Streifen eines mit einem zentralen Abschnitt des flexiblen Glasbands an einer Rissspitze verbundenen Kantenbeschnitts geformt wird;
ein Detektieren einer Breite eines Spalts zwischen der ersten Kante und dem zentralen Abschnitt;
und ein Steuern der Breite des Spalts.

2. Verfahren nach Anspruch 1, wobei das Trennen ferner ein Richten eines Laserstrahls auf die erste breite Fläche und/oder die zweite breite Fläche umfasst.

3. Verfahren nach Anspruch 2, ferner umfassend ein Richten eines Kühlstrahls auf die erste breite Fläche und/oder die zweite breite Fläche, wodurch das flexible Glasband an einer Position in der Nähe zum Laserstrahl gekühlt wird.

4. Verfahren nach einem der Ansprüche 1 bis 3, wobei der Schritt des Detektierens der Breite des Spalts ein Detektieren der Breite des Spalts in einem vorgegebenen Abstand stromabwärts der Rissspitze umfasst.

5. Verfahren nach Anspruch 4, wobei der vorgegebene Abstand ungefähr 30 cm stromabwärts der Rissspitze ist.

6. Verfahren nach Anspruch 5, wobei die Breite des Spalts am vorgegebenen Abstand unter ungefähr 0,11 mm gehalten wird.

7. Verfahren nach einem der Ansprüche 1 bis 3, wobei das Detektieren der Breite des Spalts ein Nutzen eines Laserbewegungssensors umfasst.

8. Verfahren nach einem der Ansprüche 1 bis 7, wobei das Steuern der Breite des Spalts ein Halten mechanisch induzierten Stresses an der Rissspitze unter 30 MPa umfasst.

9. Vorrichtung (12), die mechanisch induzierten Stress an einer Rissspitze verwaltet, umfassend:
eine Förderanordnung, die ein flexibles Glasband (10) in eine Förderrichtung richtet;
eine Kantenbeschnittanordnung (100), enthaltend eine Schnittvorrichtung, die das flexible Glasband empfängt und eine erste Kante (16) des flexiblen Glasbands trennt, um einen kontinuierlichen Streifen von Kantenbeschnitt zu formen, der mit einem zentralen Abschnitt des flexiblen Glasbands an einer Rissspitze verbunden ist;
eine Spaltmessvorrichtung (162), die ein Signal bereitstellt, das eine Breite eines Spalts zwischen der ersten Kante und dem zentralen Abschnitt des flexiblen Glasbands anzeigt;
und eine Spaltanpassungsvorrichtung (164), die die Breite des Spalts zwischen dem Streifen des Kantenbeschnitts und dem zentralen Abschnitt basierend auf dem Signal anpasst.

10. Vorrichtung nach Anspruch 9, wobei die Schnittvorrichtung einen Laser umfasst.

11. Vorrichtung nach Anspruch 10, ferner umfassend einen Kühlfluidstrahl in der Nähe des Lasers.

12. Vorrichtung nach einem der Ansprüche 9 bis 11, wobei die Spaltanpassungsvorrichtung die Breite des Spalts an einem vorgegebenen Abstand stromabwärts der Rissspitze detektiert.

13. Vorrichtung nach Anspruch 12, wobei der vorgegebene Abstand ungefähr 30 cm stromabwärts der Rissspitze ist.

14. Vorrichtung nach Anspruch 13, wobei die Breite des Spalts an den vorgegebenen Abständen unter 0,11 mm gehalten wird.

15. Vorrichtung nach einem der Ansprüche 9 bis 11, wobei die Spaltmessvorrichtung einen Laserbewegungssensor umfasst.

16. Vorrichtung nach einem der Ansprüche 9 bis 15, wobei mechanischer Stress an der Rissspitze unter 30 MPa gehalten wird.

## Revendications

1. Procédé de gestion de contraintes mécaniques sur une pointe de fissure comprenant :
la direction d'un ruban de verre souple vers un appareil de rognage de bord comprenant un dispositif de coupe, le ruban de verre souple comprenant une première grande surface et une seconde grande surface qui s'étendent latéralement entre un premier bord et un second bord ;
la séparation du premier bord du ruban de verre souple lorsque le ruban de verre souple se déplace par le dispositif de coupe de façon à former une bande de garniture de bord reliée à une partie centrale du ruban de verre souple au niveau d'une pointe de fissure ;
la détection d'une largeur d'un espace entre le premier bord et la partie centrale ;
et la régulation de la largeur de l'espace.

2. Procédé selon la revendication 1, ladite séparation comprenant en outre la direction d'un faisceau laser sur au moins l'une de la première grande surface et de la seconde grande surface.

3. Procédé selon la revendication 2, comprenant en outre la direction d'un jet de refroidissement sur la au moins une parmi la première grande surface et la seconde grande surface, refroidissant ainsi le ruban de verre souple au niveau d'un emplacement à proximité du faisceau laser.

4. Procédé selon l'une quelconque des revendications 1 à 3, ladite étape de détection de la largeur de l'espace comprenant la détection de la largeur de l'espace à une distance prédéfinie en aval à partir de la pointe de fissure.

5. Procédé selon la revendication 4, ladite distance prédéfinie étant d'environ 30 cm en aval à partir de la pointe de fissure.

6. Procédé selon la revendication 5, ladite largeur de l'espace à la distance prédéfinie étant maintenue inférieure à environ 0,11 mm.

7. Procédé selon l'une quelconque des revendications 1 à 3, ladite détection de la largeur de l'espace comprenant l'utilisation d'un capteur de déplacement laser.

8. Procédé selon l'une quelconque des revendications 1 à 7, ladite régulation de la largeur de l'espace comprenant le maintien d'une contrainte induite mécaniquement au niveau de la pointe de fissure inférieure à 30 MPa.

9. Appareil (12) qui gère la contrainte induite mécaniquement sur une pointe de fissure, comprenant :
un ensemble de transport qui dirige un ruban de verre souple (10) dans une direction de transport ;
un appareil de rognage de bord (100) comprenant un dispositif de coupe qui reçoit le ruban de verre souple et qui sépare un premier bord (16) du ruban de verre souple pour former une bande continue de garniture de bord reliée à une partie centrale du ruban de verre souple au niveau d'une pointe de fissure ;
un dispositif de mesure d'espace (162) qui fournit un signal indiquant la largeur d'un espace entre le premier bord et la partie centrale du ruban de verre souple ;
et un dispositif de réglage d'espace (164) qui règle la largeur de l'espace entre la bande de garniture de bord et la partie centrale sur la base du signal.

10. Appareil selon la revendication 9, ledit dispositif de coupe comprenant un laser.

11. Appareil selon la revendication 10, comprenant en outre un jet de fluide de refroidissement à proximité du laser.

12. Appareil selon l'une quelconque des revendications 9 à 11, ledit dispositif de réglage d'espace détectant la largeur de l'espace à une distance prédéfinie en aval à partir de la pointe de fissure.

13. Appareil selon la revendication 12, ladite distance prédéfinie étant d'environ 30 cm en aval à partir de la pointe de fissure.

14. Appareil selon la revendication 13, ladite largeur de l'espace aux distances prédéfinies étant maintenue inférieure à 0,11 mm.

15. Appareil selon l'une quelconque des revendications 9 à 11, ledit dispositif de mesure d'espace comprenant un capteur de déplacement laser.

16. Appareil selon l'une quelconque des revendications 9 à 15, ladite contrainte mécanique au niveau de la pointe de fissure étant maintenue inférieure à 30 MPa.
